# EUROPEAN PATENT APPLICATION

(11) **EP 3 067 806 A1**
(43) Date of publication of application: **14.09.2016**
(21) Application number: 16163448.0
(22) Date of filing: 17.12.2013
(51) Int. Cl.: G06F 17/50

(54) **SYSTEM AND METHOD FOR PERFORMING A MULTIPHYSICS SIMULATION**

(30) Priority: 14.12.2012 US 201261737405 P; 14.12.2012 US 201261737463 P
(62) Divisional of application: 13862595.9
(71) Applicant: SAS IP, Inc., Cheyenne, WY 82001 (US)
(72) Inventor: Pajerski, Vince, Canonsburg, PA 15317 (US); Solecki, Joseph, Pittsburgh, PA 15225 (US); Hawkins, Christopher, Eighty Four, PA 15330 (US)
(74) Representative: Jones Day

(57) **Abstract**

A system for performing a multiphysics simulation, the system comprising:
a computing device, wherein the computing device comprises a processor (20);
a multiple physics data model (36) communicably connected to the processor (20); and
a plurality of service proxy modules (24) communicably connected to the processor (20), wherein each service proxy module (24) is configured to extract at least a portion of the multiple physics data model (36) for use by a service (28) communicably connected thereto.

## Description

### CROSS-REFERENCE TO RELATED APPLICATIONS

This application claims the benefit under 35 U.S.C. § 119(e) of the earlier filing date of United States Provisional Patent Application Nos. 61/737,405 and 61,737,463, each filed on December 14, 2012.

### BACKGROUND

This application discloses an invention which is related, generally and in various embodiments, to a system and method for performing a multiphysics analysis and a multiphysics simulation.

Simulations are playing an increasing important role in the development of many products. Although in the past simulations were typically utilized to predict how a component or a subsystem of given product would perform, more and more simulations are now being utilized to study how the entire product will perform in the real world where multiple physics interact.

For such multiphysics simulations, a user heretofore was required to utilize multiple user interfaces and data models (e.g., one for each physics involved) in order to perform the multiphysics simulation. For complex problems involving multiphysics, the user experience and overall efficiency associated with using multiple user interfaces and data models is less than desired.

### BRIEF DESCRIPTION OF THE DRAWINGS

Various embodiments of the invention are described herein in by way of example in conjunction with the following figures, wherein like reference characters designate the same or similar elements.
FIG. 1 illustrates various embodiments of a system; and
FIG. 2 illustrates various embodiments of a computing system of the system of FIG. 1;
FIG. 3 illustrates a high-level representation of the data flow for the system of FIG. 1 according to various embodiments;
FIG. 4 illustrates various embodiments of a method;
FIG. 5 illustrates various embodiments of another system;
FIG. 6 illustrates a high-level representation of a type registration process associated with the system of FIG. 5 according to various embodiments;
FIG. 7 illustrates a high-level representation of the data flow for the system of FIG. 5 according to various embodiments; and
FIG. 8 illustrates various embodiments of another method.

### DETAILED DESCRIPTION

It is to be understood that at least some of the figures and descriptions of the invention have been simplified to illustrate elements that are relevant for a clear understanding of the invention, while eliminating, for purposes of clarity, other elements that those of ordinary skill in the art will appreciate may also comprise a portion of the invention. However, because such elements are well known in the art, and because they do not facilitate a better understanding of the invention, a description of such elements is not provided herein.

As described in more detail hereinbelow, aspects of the invention may be implemented by a computing device and/or a computer program stored on a computer-readable medium. The computer-readable medium may comprise a disk, a device, and/or a propagated signal.

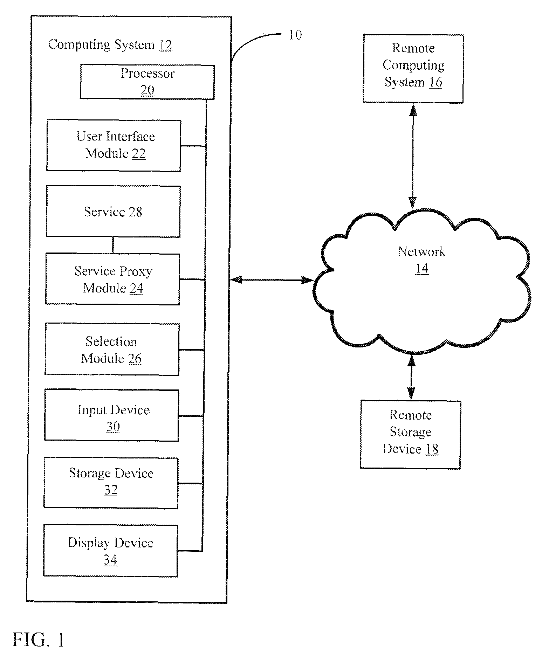

FIG. 1 illustrates various embodiments of a system 10. As described in more detail hereinbelow, the system 10 may be utilized to perform a multiphysics simulation. As used herein, the term multiphysics is meant to include, but not be limited to, sequential and simultaneous physics, dependent and independent physics, multiple physics, multiphysics phenomena, multiphysics problems, multiphysics processes, and the like. The system 10 includes a computing system 12 which is communicably connected to a network 14. The network 14 may also be communicably connected to a remote computing system 16 and a remote storage device 18. Although only one network 14, one remote computing system 16 and one remote storage device 18 are shown in FIG. 1 for purposes of simplicity, it will be appreciated that the computing system 12 may be communicably connected to any number of networks 14 which in turn may be communicably connected to any number of remote computer systems 16 and remote storage devices 18. As the computing system 12, the remote computing systems 16 and the remote storage devices 18 are each communicably connected to the network 14, it will be appreciated that the computing system 12 may be communicably connected to the remote computing systems 16 and the remote storage devices 18.

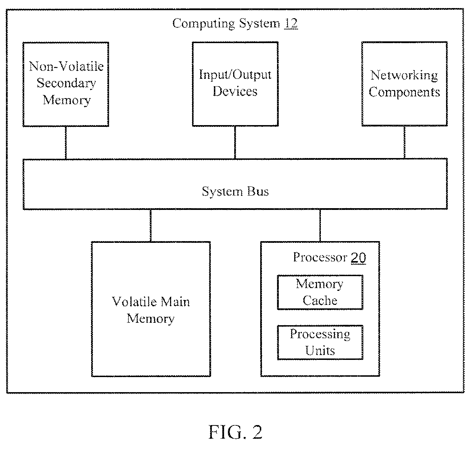

The computing system 12 may include any suitable type of computing device (e.g., a server, a desktop, a laptop, etc.) that includes at least one processor 20. The computing system 12 also includes a user interface module 22, a service proxy module 24 and a selection module 26. Although only one service proxy module 24 is shown in FIG. 1 for purposes of simplicity, it will be appreciated that the computing system 12 may include any number of service proxy modules 24. As explained in more detail hereinbelow, each service proxy module 24 is communicably connected to a corresponding service 28. Therefore, although only one service 28 is shown in FIG. 1 for purposes of simplicity, it will be appreciated that the system 10 may include any number of similar or different services 28 and/or the system 10 may utilize any number of similar or different services 28. As shown in FIG. 1, according to various embodiments, the computing system 12 also includes an input device 30, a storage device 32 and a display device 34. Various embodiments of the computing system 12 are described in more detail hereinbelow with respect to FIG. 2.

The user interface module 22 is communicably connected to the processor 20, and is configured to receive information input by a system user. The information input by the system user may include, for example, a model of an object associated with the simulation, a physics type (e.g., structural, fluid, thermal, electrical, etc.), a calculation type (e.g., static, transient, etc.), a service dimensionality (one dimensional, two dimensional, three dimensional) and object information (e.g., pressure, temperature, coordinate system, boundary conditions, etc.). According to various embodiments, the information may be input by the system user via the input device 30 which is described in more detail hereinbelow. According to other embodiments, the system 10 can infer the physics type based on the model of the object to be analyzed and/or some of the information input by the system user. According to various embodiments, the user interface module 22 may be further configured to define the display that is presented by the display device 34 to the system user. According to various embodiments, the system 10 is configured to provide a uniform look to a system user regardless of the number of different services 28 associated with the system 10. Exemplary embodiments of such displays are shown and described, for example, in U.S. Patent Application No. 13/907,564 assigned to the assignee of the instant application.

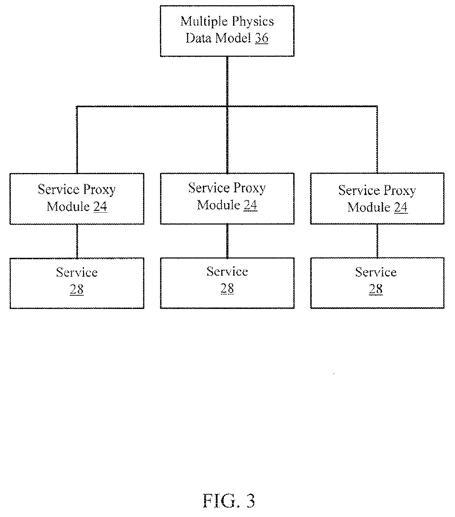

The service proxy module 24 is communicably connected to the processor 20, and can have multiple functionality. For example, according to various embodiments, the service proxy module 24 is configured to generate code for software and/or hardware and analysis of the same. Such created code may be utilized, for example, to control a system or parts thereof that are being simulated. According to various embodiments, the service proxy module 24 is configured to extract at least a portion of a multiple physics data model 36 (See FIG. 3) for use by a service 28 associated with the service proxy module 24. For example, if the service 28 to be performed by the corresponding service 28 is solving structural aspects of a problem, the service proxy module 24 may extract only those portions of the multiple physics data model 36 which are applicable to the structural aspects of the problem. According to various embodiments, the service proxy module 24 is also configured to translate the extracted portions of the multiple physics data model 36 to a format utilized by a service 28 associated with the service proxy module 24. A given service proxy module 24 may also be communicably connected to any number of other service proxy modules 24.

According to various embodiments, the multiple physics data model 36 is embodied as an object oriented database which resides at the storage device 32. According to other embodiments, the multiple physics data model 36 may be embodied as a database other than an object oriented database and may reside at any storage device which is communicably connected to the service proxy module 24. The multiple physics data model 36 is a representation of an engineering problem definition and includes all of the physics (i.e., chemical, electrical, mechanical, structural, etc.) necessary to solve the problem. As the multiple physics data model 36 includes all of the physics necessary to solve a given problem, it will be appreciated that the multiple physics data model 36 may be utilized with many different types of services 28, including many different types of solvers. As known in the art, a solver may be utilized to solve a mathematical problem, calculate a solution to a problem, compute results, etc. With the multiple physics data model 36, any number of different or similar services 28 can be utilized and/or added to the system 10 without having to change the multiple physics data model 36. Stated differently, the multiple physics data model 36 does not have to be changed each time a different service 28 is utilized, modified or added to system 10.

According to various embodiments, the service proxy module 24 may also be configured to define an extension to the multiple physics data model 36. An extension to the multiple physics data model 36 allows a system user to add any properties to any class instance that exists in the multiple physics data model 36, and according to various embodiments, can include service specific information such as, for example, conversions, criteria, number of solution steps, etc. needed for a given service 28 to be performed. All data types can be represented in the multiple physics data model 36 and can be extended by a developer. When certain service specific information is needed for a given service 28 to be performed, one or more extensions to the multiple physics data model 36 allows the service 28 to be performed without having to change the existing properties of the multiple physics data model 36. Also, according to various embodiments, extensions to the multiple physics data model 36 may be utilized to allow one or more of the services 28 to utilize or reuse the multiple physics data model 36.

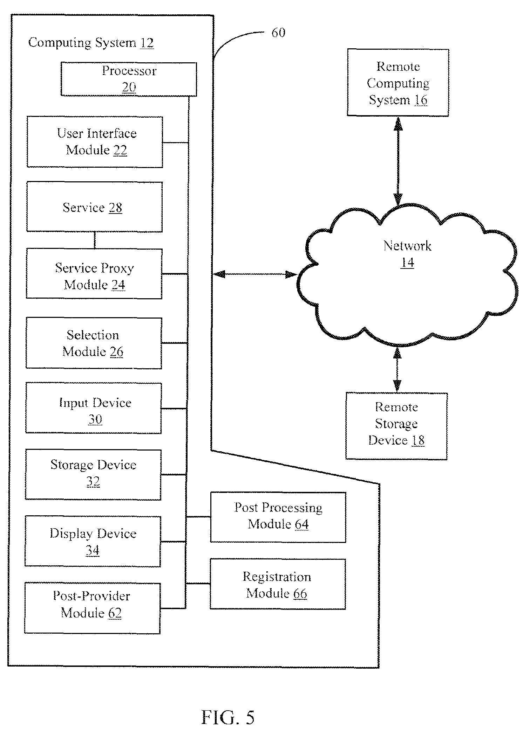

According to various embodiments, the service proxy module 24 may also be configured to define one or more rules which may be utilized by the service proxy module 24 to aggregate or hide one or more properties from defined objects in the multiple physics data model 36. For example, if an object in the multiple physics data model 36 has certain boundary conditions associated therewith, and the service 28 to be utilized is not able to handle the certain boundary conditions, a rule may be utilized to effectively hide the certain boundary conditions associated with the object from the service 28 to be utilized. For example, according to various embodiments, if the coordinates for a boundary condition are given in x, y and z coordinates but the service 28 to be performed only runs in two dimensions (e.g. x and y), the service proxy module 24 corresponding to the service 28 can define a rule which operates to hide the "z" direction from all of the objects in the multiple physics data model 36. Such rules may run when certain actions occur (e.g., when a property of an object in the multiple physics data model 36 changes) and may be used, for example, to calculate the validity, visibility and/or creatability of objects in the multiple physics data model 36. The rules may be utilized on a proxy -by -proxy basis, wherein a first service proxy module 24 utilizes a first set of rules and a second service proxy module 24 utilizes a second set of rules, and the first set is different than the second set. According to various embodiments, as described in more detail hereinafter with respect to FIG. 5, the service proxy module 24 may also be configured to extract stored service output data. Such data may be stored at any suitable location (e.g., in a memory, at storage device 32, at remote storage device 18, etc.) and utilized for subsequent operations.

The service proxy modules 24 may be incorporated into the system 10 prior to its installation or may be automatically added to the system 10 after the system 10 has already been installed or accessed. For example, according to various embodiments, a file may be used to identify the binary software components for a new service proxy module 24 that is to be added, and the system 10 may load the new proxy service module 24 and extend the multiple physics data model 36 accordingly. Thus, it will be appreciated that new service proxy modules 24 can be added to the system 10 over time (e.g., days, weeks, months after the system 10 is first installed or accessed). As set forth hereinabove, the computing system 12 may include any number of service proxy modules 24.

The service 28 is communicably connected to the service proxy module 24 and is configured to perform a service. As set forth hereinabove, each service 28 is communicably connected to a corresponding service proxy module 24. As the system 10 may include a plurality of service modules 24, it will be appreciated that the system 10 may include and/or utilize a plurality of services 28. The plurality of services 28 may perform any number of similar or different services. For example, according to various embodiments, one or more of the services 28 may be configured to perform a geometry service, a mesh service, a post-processing service, an engineering data service, a kinematic calculation service, a system coupling service, etc. According to other embodiments, one or more of the services 28 may be embodied as a solver (e.g., a mechanical solver, a fluids solver, an electrical solver, etc.). In general, such solvers are utilized by the system 10 to determine a multiphysics solution, and according to various embodiments, the solver output (or any service output) may be stored in a memory or at a suitable storage device for future use by a given service proxy module 24. According to other embodiments, the solver output may be discarded.

The selection module 26 is communicably connected to the processor 20 and is configured to select the service proxy modules 24 corresponding to the services 28 which are to be utilized for the multiphysics simulation. According to various embodiments, the selection module 26 selects the service proxy modules 24 based on service selections made by a system user (e.g., the system user clicks a mouse to select specific solvers and the selection module 26 then selects the corresponding service proxy modules 24). According to other embodiments, in instances where the system user does not select specific services 28, the selection module 26 may automatically select the service proxy modules 24 based on information known by the system 10, including information related to the physics and/or the problem (e.g., a model of an object associated with the simulation, a calculation type, a service dimensionality, object information, etc.). As some of this information may be input by a system user (e.g., importing a file, selecting a service dimensionality, etc.), it will be appreciated that according to various embodiments, the selection module 26 selects the service proxy modules 24 based at least in part on information input by a system user.

The modules 22, 24, 26 may be implemented in hardware, firmware, software and combinations thereof. For embodiments utilizing software, the software may utilize any suitable computer language (e.g., C, C++, C#, Java, JavaScript, Python, Visual Basic, VBScript, Delphi) and may be embodied permanently or temporarily in any type of machine, component, physical or virtual equipment, storage medium, or propagated signal capable of delivering instructions to a device. The modules (e.g., software application, computer program) may be stored on a computer-readable medium (e.g., disk, device, and/or propagated signal) such that when a computer reads the medium, the functions described herein are performed.

According to various embodiments, the functionality of the modules 22, 24, 26 may be combined into fewer modules or even into a single module. According to other embodiments, the modules 22, 24, 26 may be distributed across two or more computing devices of the computing system 12.

The input device 30 is communicably connected to the processor 20 and may be any suitable type of input device 30. For example, according to various embodiments, the input device 30 may be a mouse, a trackball, a joystick, a keyboard, a touch screen, etc. Although only one input device 30 is shown in FIG. 1 for purposes of simplicity, it will be appreciated that the computing system 12 may include any number of input devices 30.

The storage device 32 is communicably connected to the processor 20 and may be any suitable type of data storage device. For example, according to various embodiments, the storage device 32 may utilize semiconductor, magnetic and/or optical technologies to store data. Although only one storage device 30 is shown in FIG. 1 for purposes of simplicity, it will be appreciated that the computing system 12 may include any number of storage devices 32. According to various embodiments, the storage device 32 is integral with the computing system 12 as shown in FIG. 1. According to other embodiments, the storage device 32 is remote from but communicably connected to the computing system 12.

The display device 34 is communicably connected to the processor 20 and may be any suitable type of display device 34. For example, according to various embodiments, the display device 34 may be a cathode ray tube display device, a light- emitting diode display device, a liquid crystal display device, a plasma display device, etc. Although only one display device 34 is shown in FIG. 1 for purposes of simplicity, it will be appreciated that the computing system 12 may include any number of display devices 34.

The network 14 may include one or more networks, and each network may include any type of delivery system including, but not limited to, a local area network (e.g., Ethernet), a wide area network (e.g. the Internet and/or World Wide Web), a telephone network (e.g., analog, digital, wired, wireless, fiber optic, PSTN, ISDN, GSM, GPRS, and/or xDSL), a packet-switched network, a radio network, a television network, a cable network, a satellite network, and/or any other wired or wireless communications network configured to carry data. A given network 14 may include elements, such as, for example, intermediate nodes, proxy servers, routers, switches, and adapters configured to direct and/or deliver data. In general, the system 10 may be structured and arranged to communicate with the remote computing system 16 and the remote storage device 18 via the one or more networks 14 using various communication protocols (e.g., HTTP, HTTPS, TCP/IP, UDP, WAP, WiFi, Bluetooth) and/or to operate within or in concert with one or more other communications systems.

The remote computing system 16 may include any suitable type of computing device which includes a processor. For example, according to various embodiments, the remote computing system 16 may include one or more servers, desktops, laptops, etc. which can be communicably connected to the network 14.

The remote storage device 18 may be any suitable type of data storage device. For example, according to various embodiments, the remote storage device 18 may utilize semiconductor, magnetic and/or optical technologies to store data.

FIG. 2 illustrates various embodiments of the computing system 12. The computing system 12 may be embodied as one or more computing devices, and includes networking components such as Ethernet adapters, non-volatile secondary memory such as magnetic disks, input/output devices such as keyboards and visual displays, volatile main memory, and a processor 20. Each of these components may be communicably connected via a common system bus. The processor 20 includes processing units and on-chip storage devices such as memory caches.

According to various embodiments, the computing system 12 includes one or more modules which are implemented in software, and the software is stored in non-volatile memory devices while not in use. When the software is needed, the software is loaded into volatile main memory. After the software is loaded into volatile main memory, the processor 20 reads software instructions from volatile main memory and performs useful operations by executing sequences of the software instructions on data which is read into the processor 20 from volatile main memory. Upon completion of the useful operations, the processor 20 writes certain data results to volatile main memory.

FIG. 3 illustrates a high-level representation of the data flow for the system 10 according to various embodiments. As described hereinabove, the system 10 utilizes one multiple physics data model 36 for a plurality of different services 28, wherein the different services 28 are accessed via corresponding service proxy modules 24. Each service 28 is communicably connected to a corresponding service proxy module 24. Each service proxy module 24 can extract at least a portion of the multiple physics data model 36 and translate the extracted portion of the multiple physics data model 36 to a format which is appropriate for its corresponding service 28. The portion extracted by a first service proxy module 24 can be the same as or different than the portion extracted by a second service proxy module 24. As different services 28 may require different formats, it will be appreciated that a first service proxy module 24 may translate a portion of the multiple physics data model 36 to a first format and a second service proxy module 24 may translate a portion of the multiple physics data model 36 to a second format, wherein the first format is different than the second format. Although only three services 28 and three corresponding service proxy modules 24 are shown in FIG. 3 for purposes of simplicity, it will be appreciated that the one multiple physics data model 36 may be utilized with any number of similar or different services 28.

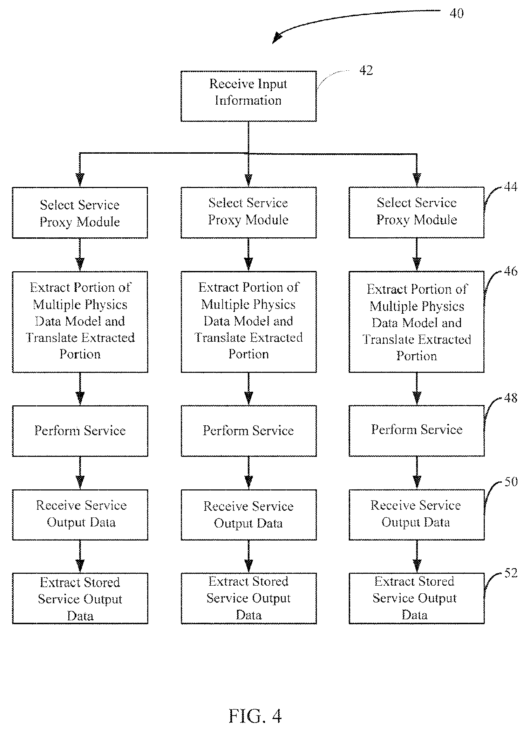

FIG. 4 illustrates various embodiments of a method 40 for performing a multiphysics simulation. For purposes of simplicity, the method 40 will be described in the context of being implemented by the system 10 of Fig. 1. However, it will be appreciated that the method 40 may be implemented by devices and/or systems other than the system 10 of FIG. 1.

Prior to the start of the process, a model of an object associated with the simulation (e.g., a three-dimensional model of an engine) may be generated and stored at a storage device communicably connected to the system 10 (e.g., at storage device 32). Additionally, a page may be presented by the display device 34, and a system user may utilize one or more of the input devices 30 to input information associated with the multiphysics simulation. Such information may include, for example, one or more files, parameters, limitations, assumptions, geometries, etc. associated with the simulation to be performed.

The process starts at block 42, where the information input by the system user is received at the computing system 12. According to various embodiments, the system 10 stores the received information at the storage device 32.

From block 42 the process advances to block 44, where the selection module 26 selects the appropriate service proxy modules 24 based at least in part on information input by a system user. In general, the appropriate service proxy modules 24 are the ones which are communicably connected to the services 28 which will be utilized to perform the multiphysics simulation. Although the selection of three service proxy modules 24 are shown in block 44, it will be appreciated that any number of service proxy modules 24 may be selected at block 44, and the selections may be sequential or concurrent.

From block 44, the process advances to block 46, where each selected service proxy module 24 extracts the relevant portions of the multiple physics data model 36 for use by the corresponding services 28. According to various embodiments, the selected service proxy modules 24 may also translate the extracted portions of the multiple physics data model 36. Each service proxy module 24 may translate the portion which it extracted to a format utilized by its corresponding service 28, and forward the translated format to the corresponding service 28. The extractions and accompanying translations shown at block 46 may be performed sequentially or concurrently.

From block 46, the process advances to block 48, where the services 28 receive the appropriate translated format from their corresponding service proxy modules 24, perform the associated services and according to various embodiments, forward the service output data (e.g., solution data) to their corresponding service proxy modules 24. It will be appreciated that the service 28 performed by and the output data of a first service 28 may be different than the service 28 performed by and the output data of a second service 28. The respective services 28 performed at block 48 may be performed sequentially or concurrently. Although the performance of three services 28 are shown at block 48 (corresponding to the three service proxy modules 24 selected at block 44), it will be appreciated that any number of services 28, different or similar, may be performed at block 48.

From block 48, the process advances to block 50, where the service proxy modules 24 receive the service output data from the corresponding services 28. According to various embodiments, the service proxy modules 24 can maintain the service output data in a memory, forward the received service output data to one or more storage devices (e.g., storage device 18, storage device 32, etc.) and/or discard the service output data.

For embodiments where the service output data is forwarded from the service proxy modules 24 for storage, the process advances from block 50 to block 52, where the service proxy modules 24 extract stored service output data for further operations (e.g., using service output data as input data for another service 28, postprocessing operations, etc.). According to various embodiments, for a given portion of the stored service output data, the service proxy module 24 which received the given portion of the service output data at block 50 is the service proxy module 24 which is utilized to extract the given portion at block 52. Thus it will be appreciated that any number of different service proxy modules 24 may be utilized to extract the stored service output data for further operations.

According to various embodiments, prior to the translation of the multiple physics data model 36 at block 46, a selected service proxy module 24 may extend the multiple physics data model 36 by adding extensions to the multiple physics data model 36 as needed by a corresponding service 28. Similarly, a given selected service proxy module 24 may utilize predefined rules to aggregate or hide one or more properties from defined objects in the multiple physics data model 36 prior to the translation.

FIG. 5 illustrates various embodiments of another system 60. The system 60 may be utilized to perform a mulitphysics simulation and/or a multiphysics analysis and is similar to the system 10 of FIG. 1, but is different in that the system 60 also includes a post-provider module 62 and a postprocessing module 64, and may include a registration module 66. Conceptually, the registration module 66 and the modules 22, 24, 26 of the system 10 may be considered as part of the front end of the system 60 and the post-provider module 62 and postprocessor module 64 may be considered part of the back end of the system 60. Although only one post-provider module 62 is shown in FIG. 5 for purposes of simplicity, it will be appreciated that the system 60 may include any number of post-provider modules 62. For each service 28 (and thus for each corresponding service proxy module 24), the system 60 includes a corresponding post-provider module 62. According to various embodiments, the respective post-provider modules 62 may be embodied as submodules of the corresponding service proxy modules 24.

The post-provider modules 62 are communicably connected to the processor 20, and each post-provider module 62 is configured to determine which portion of stored service output data to extract from the one or more storage devices to provide a desired visualization of the service output data. A given post-provider module 62 is configured to extract stored service output data associated with its corresponding service 28 and is further configured to translate the extracted service output data into a format that can be handled by the post processing module 64. According to various embodiments, the post-provider module 62 is also configured to determine what service generated data is available for processing or visualization by a system user by and/or whether any additional dependent generated data is needed from other post-provider modules 62 by the post processing module 64. For example, some visualization techniques require multiple results to be evaluated simultaneously in order for the post processing module 64 to generate the proper data for the display device to display the desired visualization.

In order for the post processing modules 64 to be physics agnostic (or solver agnostic), according to various embodiments the post-provider modules 62 may be configured to translate the extracted service output data from the one or more storage devices to a physics-neutral format. According to various embodiments, the physics-neutral format may be a hierarchical format. According to various embodiments, such a physics-neutral hierarchical format has, for example, topological information (e.g., body, faces, edges, vertices, etc.) at the highest level, followed by mesh data, followed by location data (e.g., nodes and elements), followed by finite element result data (e.g., vectors, tensors, velocity values, etc.).

The post processing module 64 is communicably connected to the processor 20 and is configured to convert the service output data translated by the respective post-provider modules 62 to a format that can be displayed by the display device 34. According to various embodiments, the post processing module 64 is generic in that it can work with the service output data from any service 28 (after the service output data has been translated by the corresponding post-provider module 62). As described hereinabove, in certain embodiments, the post processing module 64 is able to handle data from a plurality of post-provider modules 62.

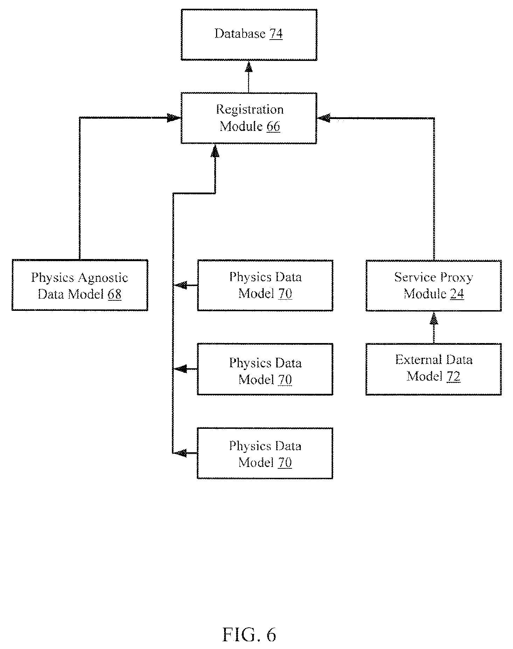

According to various embodiments, the system 60 is also different from the system 10 in that in lieu of the multiple physics data model 36, the system 60 includes a plurality of different data models. The plurality of different data models may include, for example, a physics agnostic data model 68 (See FIG. 6), one or more different or similar physics data models 70 (FIG. 6) and/or one or more external data models 72 (See FIG. 6). As used herein, an external data model is meant to include, but not be limited to, data models which are not included in the system 60 when the system 60 is installed. For the embodiments which include the plurality of different data models, the system 60 can include the registration module 66. The registration module 66 is communicably connected to the processor 20 and according to various embodiments is configured to register a plurality of data models with the system 60. The plurality of data models registered with the system 60 may include, for example, the physics agnostic data model 68, one or more of the physics data models 70 and/or one or more of the external data models 72. According to various embodiments, any number of different physics data models 70 and any number of different external data models 72 may be registered with the system 60. The registration of the physics agnostic data model 68, the plurality of physics data models 70 and the one or more external data models 72 creates a database 74 (See FIG. 6) which is a neutral format representation of the system's data models 68, 70 and one or more of the external data models 72. The database 74 may reside at any suitable storage device (e.g., storage device 32), at a storage device accessible by the computing system 12 (e.g., remote storage device 18) and/or combinations thereof.

According to various embodiments, the physics agnostic data model 68 is embodied as a class library which can be utilized by any number of different service proxy modules 24 and includes physics neutral information such as, for example, constraints, geometry, meshing, reference frames, selection sets, idealizations, topology, materials, etc. The physics neutral information can be used by any service 28, regardless of physics specifics of the technology associated with the service 28. The type information associated with the physics agnostic data model 68 may be utilized, shared and reused by any of the service proxy modules 24 and their corresponding services 28. The physics agnostic data model 68 may be written in any suitable programming language (e.g., C#), and type data associated with the physics agnostic data model 68 can be statically registered with the system 60 via the registration module 66.

The system 60 may include a plurality of physics data models 70. According to various embodiments, the plurality of physics data models 70 are embodied as class libraries which include physics specific information. For example, a first physics data model 70 may be embodied as a first class library which includes chemical information, a second physics data model 70 may be embodied as a second class library which includes electrical information, a third physics data model 70 may be embodied as a third class library which includes mechanical information, etc. The type information associated with a given physics data model 70 may be utilized, shared and reused by any of the service proxy module 24 and their corresponding services 28. Each physics data model 70 may be written in any suitable programming language (e.g., C#), and each physics model's type data can be statically registered with the system 60 via the registration module 66.

It will be appreciated that in certain instances, a user may wish to utilize a service 28 (e.g., a particular mechanical solver) which has an external data model 72 associated therewith which can include type data which is different from the type data utilized by the physics agnostic data model 68. According to various embodiments, the type data associated with the external data model 72 can be similar to the type data utilized by the_physics data models 70. According to other embodiments, the type data associated with the external data model 72 can be different from the type data utilized by_the physics data models 70. For such instances, a service proxy module 24 communicably connected to the external data model 72 (See FIG. 6) can translate the type data of the external data model 72 to the same format utilized by the physics agnostic data model 68 and the physics data models 70, and the translated type data can be dynamically registered with the system 60 via the registration module 66. With the above-described database 74, any number of external data models 72 can be easily utilized via corresponding service proxy modules 24 and the dynamic registration process.

The modules 62, 64, 66 may be implemented in hardware, firmware, software and combinations thereof. For embodiments utilizing software, the software may utilize any suitable computer language (e.g., C, C++, C#, Java, JavaScript, Python, Visual Basic, VBScript, Delphi) and may be embodied permanently or temporarily in any type of machine, component, physical or virtual equipment, storage medium, or propagated signal capable of delivering instructions to a device. The modules (e.g., software application, computer program) may be stored on a computer-readable medium (e.g., disk, device, and/or propagated signal) such that when a computer reads the medium, the functions described herein are performed.

According to various embodiments, the functionality of the modules 62, 64, 66 may be combined into fewer modules. According to other embodiments, the modules 62, 64, 66 may be distributed across two or more computing devices of the computing system 12.

FIG. 6 illustrates a high-level representation of the static and dynamic registration processes according to various embodiments. As described hereinabove, the type data of the physics agnostic data model 68 and the type data of any number of physics data models 70 are statically registered with the system 60 via the registration module 66. For external data models 72, the type data of the external data models 72 are communicated to the corresponding service proxies 24, where they are translated to the same format utilized by the physics agnostic data model 68 and the plurality of physics data models 70. The service proxy modules 24 forward the translated data types to the registration module 66 for registration with the system 60. The database 74 is a unified representation of all of the data models which have been registered with the system 60. Although only three physics data models 70 are shown in FIG. 6 for purposes of simplicity, it will be appreciated that the type data for any number of physics data models 70 may be statically registered with the system 60. Similarly, although only one external data model 72 is shown for purposes of simplicity in FIG. 6, it will be appreciated that the type data for any number of similar or different external data models 72 may be dynamically registered with the system 60.

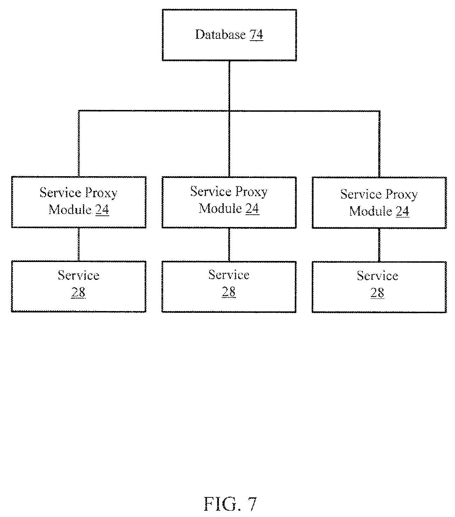

FIG. 7 illustrates a high-level representation of the data flow for the system 60 according to various embodiments. As described hereinabove, the system 60 utilizes a database 74 which is a representation of all the data models which have been registered with the system 60 (e.g., the physics agnostic data model 68, the plurality of physics data models 70, and/or one or more external data models 72). In general, the data in the database 74 is in a neutral format that allows for reuse of the data and extensibility of the system 60 (e.g., by increasing the number of the services 28 or solvers that the system 60 can include and/or utilize) without having to rewrite the native language of the service 28 or solver. The database 74 provides a standardized format that is transportable - it is not tied to a particular programming language or technology. For each native service 28 to be performed, the corresponding service proxy modules 24 can extract at least a portion of the database information and translate the extracted portion to a format which is appropriate for their corresponding services 28. For each service 28 to be performed, the corresponding service proxy modules 24 can extract at least a portion of the database information and translate the extracted portion to a format which is appropriate for their corresponding service 28. The portion extracted by a first service proxy module 24 can be the same as or different than the portion extracted by a second service proxy module 24. As different services 28 may require different formats, it will be appreciated that a first service proxy module 24 may translate a portion of the database 74 to a first format and a second service proxy module 24 may translate a portion of the database 74 to a second format, wherein the first format is different than the second format. It will be appreciated that the service proxy modules 24 can use both physics neutral and physics specific data, and services 28 do not use physics specific data. Although only three service proxy modules 24 are shown for purposes of simplicity in FIG. 7, it will be appreciated that any number of service proxy modules 24 may extract portions of the database information. Similarly, although only three services 28 are shown in FIG. 7 for purposes of simplicity, it will be appreciated that the database 74 may be utilized with any number of different services 28.

In view of the above-described multiple different data model approach and the static and dynamic registration capability of the system 60, it will be appreciated that any number of different services 28 can be added to and utilized by the system 60, all while presenting a common interface to the user and without having to rewrite an existing data model (e.g., the physics agnostic data model 68, the physics data models 70 and/or the external data models 72).

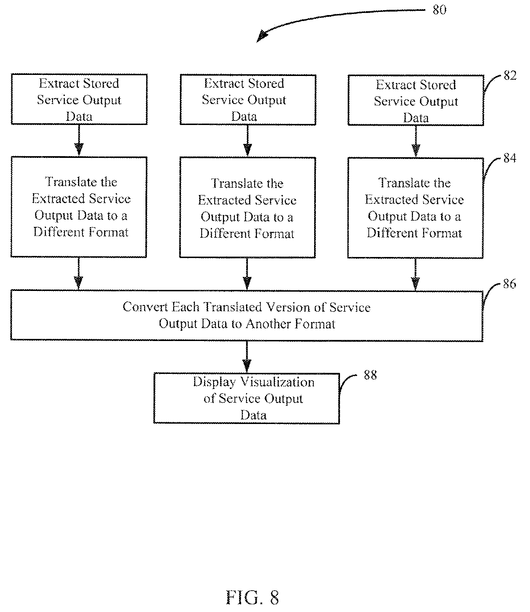

FIG. 8 illustrates various embodiments of a method 80 for processing service output data from a multiphysics simulation. For purposes of simplicity, the method 80 will be described in the context of being implemented by the multiple different data model embodiments of the system 60 of Fig. 5. However, it will be appreciated that the method 80 may be implemented by devices and/or systems other than the system 60 of FIG. 5.

Prior to the start of the process, service output data generated by a service 28 can be stored in a memory or at one or more suitable storage devices (e.g., storage device 18, storage device 32, etc.). The service output data may be generated, for example, by one or more services 28 in accordance with the method 40 of FIG. 4 or by one or more services 28 using known methods.

The process starts at block 82, where post-provider modules 62 extract service output data from the one or more storage devices. According to various embodiments, the post-provider modules 62 determine which portions of the stored service output data to extract. In general, each post-provider module 62 is associated with or integral with a corresponding service proxy module 24, and each post provider module 62 extracts only service output data which was forwarded to storage via its corresponding service proxy module 24. For purposes of simplicity, only three post- provider modules 62 are shown as extracting stored service output data at block 82. However, it will be appreciated that any number of different post-provider modules 62 may extract stored service output data sequentially or concurrently at block 82.

From block 82, the process advances to block 84, where one or more of the plurality of post-provider modules 62 translate the extracted stored service output data to a format which can be handled by the post processing module 64, and forwards the translated versions of the service output data to the post processor module 64. The translations may be performed sequentially or concurrently, and the forwarding may be performed sequentially or concurrently.

From block 84, the process advances to block 86, where the post processing module 64 receives the translated versions of the service output data forwarded by the post-provider modules 62, converts the translated versions to a format that can be displayed by the display device 34, and forwards the converted service output data to the display device 34. For example, if the service output data includes different temperatures, the format may provide for different temperature ranges to be shown as different colors on the display.

From block 86, the process advances to block 88, where the display device 34 receives the converted service output data and displays a desired visualization of the service output data. Although only one display device 34 is shown as displaying the desired visualization in FIG. 8 for purposes of simplicity, it will be appreciated that the visualization may be displayed at any number of display devices 34 communicably connected to the processor 20.

Nothing in the above description is meant to limit the invention to any specific materials, geometry, or orientation of elements. Many part/orientation substitutions are contemplated within the scope of the invention and will be apparent to those skilled in the art. The embodiments described herein were presented by way of example only and should not be used to limit the scope of the invention.

Although the invention has been described in terms of particular embodiments in this application, one of ordinary skill in the art, in light of the teachings herein, can generate additional embodiments and modifications without departing from the spirit of, or exceeding the scope of, the claimed invention. Accordingly, it is understood that the drawings and the descriptions herein are proffered only to facilitate comprehension of the invention and should not be construed to limit the scope thereof.

In the following further examples are described to facilitate the understanding of this invention.
1. A system for performing a multiphysics simulation is described, the system comprising: a computing device, wherein the computing device comprises a processor; a database communicably connected to the processor, wherein the database is associated with a plurality of data models; and a plurality of service proxy modules communicably connected to the processor, wherein each service proxy module is configured to extract at least a portion of the database for use by a service communicably connected thereto.
2. The system of example 1, wherein the plurality of data models may comprise at least one of each of the following:
   a physics agnostic data model; and
   a physics data model.
3. The system of example 1, wherein the plurality of data models comprise at least one of each of the following:
   a physics agnostic data model; and an external data model.
4. The system of example 1, wherein the plurality of data models comprise at least one of each of the following:
   a physics agnostic data model;
   a physics data model; and
   an external data model.
5. The system of example 1, wherein at least one of the service proxy modules is further configured to translate an extracted portion of the database to a format utilized by the service communicably connected thereto.
6. The system of example 1, wherein at least one of the service proxy modules might be further configured to extract stored service output data.
7. The system of example 1, wherein at least one of the service proxy modules is communicably connected to the service.
8. The system of example 1, further comprising a plurality of services, wherein each service proxy module is communicably connected to a different one of the plurality of services.
9. The system of example 8, wherein a first one of the plurality of services is configured to provide a first service associated with the multiphysics simulation and a second one of the plurality of services is configured to provide a second service associated with the multiphysics simulation, wherein the first service is different than the second service.
10. The system of example 1, wherein at least one of the plurality of services is a solver.
11. The system of example 1, further comprising a plurality of post-provider modules communicably connected to the processor, wherein at least one of the post- provider modules is configured to extract stored service output data.
12. The system of example 1, further comprising a plurality of post-provider modules communicably connected to the processor, wherein at least one of the post- provider modules is integral with one of the plurality of service proxy modules.
13. The system of example 11, wherein each post-provider module is further configured to translate the extracted output data to a different format.
14. The system of example 10, further comprising a post processing module communicably connected to the processor, wherein the post processing module is configured to convert the output data translated by each post-provider module to another format.
15. A method, implemented at least in part by a computing device having a processor, for performing multiphysics simulation, the method comprising:
   at the computing device:
      extracting service output data associated with a plurality of services;
      translating the extracted service output data service to a different format; and
      converting the translated service output data to another format.
16. The method of example 15, wherein the translating comprises translating the service output data associated with a first service to the different format and translating the service output data associated with a second service to the different format.
17. The method of example 15, wherein the translating is performed concurrently.
18. The method of example 15 further comprising displaying the converted service output data.
19. A computer-readable medium having stored thereon instructions which, when executed by a processor, cause the processor to perform the steps of:
   extracting service output data associated with a plurality of services;
   translating the extracted service output data service to a different format; and
   converting the translated service output data to another format.
20. The computer-readable medium of example 19, wherein the execution of the instructions by the processor further cause the processor to perform the step of translating the service output data associated with a first service to the different format and translating the service output data associated with a second service to the different format.
21. The computer-readable medium of example 19, wherein the execution of the instructions by the processor further cause the processor to perform the step of translating the extracted service output data associated with the plurality of services to a different format.
22. The computer-readable medium of example 19, wherein the execution of the instructions by the processor further cause the processor to perform the step of displaying the converted service output data.

## Claims

1. A system for performing a multiphysics simulation, the system comprising:
a computing device, wherein the computing device comprises a processor (20);
a multiple physics data model (36) communicably connected to the processor (20); and
a plurality of service proxy modules (24) communicably connected to the processor (20),
wherein each service proxy module (24) is configured to extract at least a portion of the multiple physics data model (36) for use by a service (28) communicably connected thereto.

2. The system of claim 1, wherein the multiple physics data model (36) is a representation of an engineering problem definition, wherein preferably the multiple physics data model (36) comprises physics for solving the engineering problem.

3. The system of claim 1, wherein at least one of the service proxy modules (24) is further configured to translate an extracted portion of the multiple physics data model (36) to a format utilized by the service (28) communicably connected thereto.

4. The system of claim 1, wherein at least one of the service proxy modules (24) is further configured to
(i) define an extension to the multiple physics data model, or
(ii) define a rule associated with an object in the multiple physics data model. or
(iii) to generate code, or
(iv) to extract stored service output data.

5. The system of claim 1, further comprising a plurality of services (28), wherein each service (28) is communicably connected to a different one of the plurality of services (28).

6. The system of claim 1, wherein a first one of the plurality of services (28) is configured to provide a first service associated with the multiphysics simulation and a second one of the plurality of services is configured to provide a second service associated with the multiphysics simulation, wherein the first service is different than the second service, or wherein at least one of the plurality of services (28) is a solver.

7. The system of claim 1, further comprising a selection module communicably connected to the processor (20), wherein the selection module is configured to select at least one of the plurality of service proxy modules (24) to access the service (28).

8. A method, implemented at least in part by a computing device having a processor (20), for performing multiphysics simulation, the method comprising:
at the computing device:
selecting a plurality of service proxies, wherein each of the plurality of service proxies are associated with a different service (28); and
extracting (82) a plurality of portions of a multiple physics data model (36) for use by the selected plurality of service proxies.

9. The method of claim 8, further comprising translating (84) a first extracted portion of the multiple physics data model (36) into a first format and translating a second extracted portion of the multiple physics data model (36) to a second format.

10. The method of claim 9, wherein the first format is different from the second format.

11. The method of claim 9, further comprising utilizing the first and second formats to perform a plurality of services (28).

12. The method of claim 8, further comprising at the computing device, extending the multiple physics data model, or modifying at least one property of an object in the multiple physics data model (36) based on a predefined rule.

13. A computer-readable medium having stored thereon instructions which, when executed by a processor (20), cause the processor (20) to perform the steps of:
selecting a plurality of service proxies, wherein each of the plurality of service proxies are associated with a different service; and
extracting (82) a plurality of portions of a multiple physics data model (36) for use by the selected plurality of service proxies.

14. The computer-readable medium of claim 13, wherein the execution of the instructions by the processor (20) further cause the processor (20) to perform the step of translating (84) a first extracted portion of the multiple physics data model (36) into a first format and translating a second extracted portion of the multiple physics data model (36) to a second format, wherein preferably the execution of the instructions by the processor (20) further cause the processor (20) to perform the step of utilizing the first and second formats to perform a plurality of services.

15. The computer-readable medium of claim 13, wherein the execution of the instructions by the processor (20) further cause the processor (20) to perform the step of extending the multiple physics data model, or to perform the step of modifying at least one property of an object in the multiple physics data model (36) based on a predefined rule.
